# EUROPEAN PATENT SPECIFICATION

(11) **EP 2 318 628 B1**
(45) Date of publication and mention of the grant of the patent: **29.05.2013**
(21) Application number: 09793927.6
(22) Date of filing: 02.07.2009
(51) Int. Cl.: E05B 65/12

(54) **HANDLE WITH SAFETY DEVICE FOR VEHICLES**
GRIFF MIT SICHERHEITSVORRICHTUNG FÜR FAHRZEUGE
POIGNÉE AVEC DISPOSITIF DE SÉCURITÉ POUR VÉHICULES

(30) Priority: 07.07.2008 IT MI20081235
(43) Date of publication of application: 11.05.2011
(73) Proprietor: Valeo S.P.A., 10023 Santena (TO) (IT)
(72) Inventor: SAVANT, Fiorenzo, I-10023 Santena (IT)
(74) Representative: Croonenbroek, Thomas Jakob
(86) International application number: PCT/EP2009/058365
(87) International publication number: WO 2010/003881

(56) References cited:
- WO-A-2004/042177
- WO-A-2006/003197
- WO-A-2008/068262
- US-A1- 2008 136 199

## Description

The present invention relates to a handle with safety device for vehicles, in particular a handle with a lever which can be used for unlocking and simultaneously opening the door of a motor vehicle and is provided with an inertial safety device which prevents the accidental opening of this door in case of an accident.

WO 2004/042177 discloses a vehicle handle, which comprises a rocker which can rotate with respect to a frame which rotatably supports a lever mechanically connected to the rocker, so that the latter can rotate when the lever is driven, wherein a pendulum provided with an inertial mass is pivoted to the frame for oscillating in case of strong accelerations, for example due to an impact. The rocker is provided with a shoulder suitable for being intercepted by a stop member integral with the pendulum for preventing the rotation of the rocker, the operation of the handle and thus the accidental opening of the door.

However, during an impact, the direction of said accelerations is not constant but may oscillate with a waveform evolution, for example sinusoidal, so that the stop member of the pendulum may move away from the shoulder, so as to unlock the lever of the handle before the impact has ended.

It is therefore an object of the present invention to provide a handle, which is free from said disadvantage, namely a handle wherein the rocker can be locked when the pendulum oscillates in both directions due to strong accelerations. Said object is achieved with a handle, whose main features are disclosed in the first claim, while other features are disclosed in the remaining claims.

Thanks to its particular second rocker, which releases the movement of the pendulum from the one of the stop member, the first rocker of the handle according to the present invention can be locked when the pendulum oscillates in one direction and in the opposite direction.

Thanks to the particular mutual arrangement, relative dimensions and mechanical connection of the parts of the pendulum and of the second rocker, the handle according to the present invention is more compact and lighter than the known handles and further it allows faster reaction times.

The first rocker is preferably provided with a cam surface on which a tappet of the pendulum can slide for driving the pendulum and the second rocker during the normal use, so as to prevent their malfunctions, due to the prolonged inactiviy, in case of impact.

Further advantages and features of the handle according to the present invention will become clear to those skilled in the art from the following detailed and non-limiting description of two embodiments thereof with reference to the attached drawings, wherein:
- figure 1 shows a partial side view of the first embodiment of the handle in a rest position;
- figure 2 shows a partial top view of the handle of figure 1;
- figure 3 shows section III-III of figure 2;
- figure 4 shows a partial top view of the handle of figure 1 in a normal use position;
- figure 5 shows section V-V of figure 4;
- figure 6 shows a partial top view of the handle of figure 1 in a first impact position;
- figure 7 shows section VII-VII of figure 6;
- figure 8 shows a partial top view of the handle of figure 1 in a second impact position;
- figure 9 shows section IX-IX of figure 8;
- figure 10 shows a partial side view of the second embodiment of the handle in a rest position; and
- figure 11 shows a partial top view of the handle of figure 10.

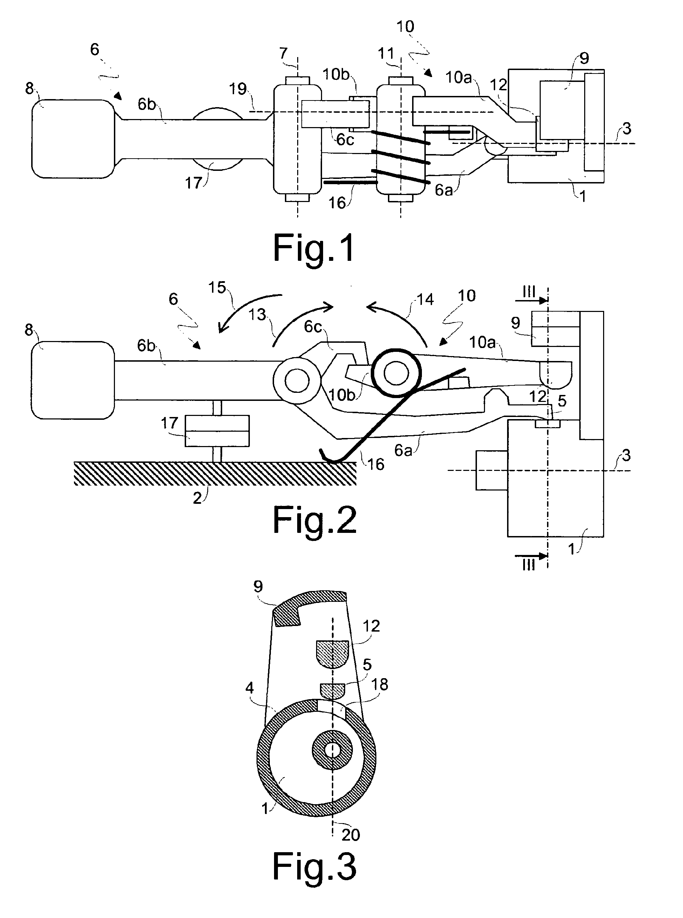

Referring to figures 1 to 3, it is seen that the handle according to the first embodiment of the present invention comprises in a known way a first rocker 1 which can rotate with respect to a frame 2 which rotatably supports a lever (not shown in the figures) which can be pulled for unlocking and simultaneously opening the door of a motor vehicle. Said lever is mechanically connected to the first rocker 1, so that the latter can rotate around a first axis 3 when the lever is driven. First rocker 1 is in turn connected to the unlocking mechanism of the door, so that the latter can be opened by further pulling the lever. Said connection is for example carried out by means of a cable which is pulled by first rocker I during its rotation.

First rocker I is provided with a cam surface 4 on which a tappet 5 arranged on a first arm 6a of a pendulum 6 pivoted to frame 2 or to a body integral therewith can slide for oscillating around a second axis 7 substantially perpendicular to first axis 3 around which first rocker 1 rotates. A second arm 6b of pendulum 6 opposite to first arm 6a with respect to second axis 7 is provided with an inertial mass 8. First rocker 1 is provided with a shoulder 9 arranged at a distance from cam surface 4 higher than the height of tappet 5 of pendulum 6. Tappet 5 passes then under shoulder 9 without touching it if it slides on cam surface 4.

According to the invention, a second rocker 10 is mechanically connected to pendulum 6 for oscillating around a third axis 11 substantially parallel to second rotation axis 7 of pendulum 6 when the latter oscillates around second axis 7. Second rocker 10 comprises an arm 10a provided with a stop member 12 suitable for intercepting shoulder 9 during an oscillation of second rocker 10 for preventing at least partially the rotation of first rocker 1. Second rocker 10 further comprises a tongue 10b arranged on the side opposite to arm 10a with respect to third axis 11. Pendulum 6 is provided with a tongue 6c arranged on the same side of first arm 6a with respect to second axis 7. The mechanical connection between pendulum 6 and second rocker 10 is obtained by means of the engagement, in particular the contact, of tongue 6c of pendulum 6 with tongue 10b of second rocker 10. Through this first mechanical connection, the rotation of pendulum 6 in one direction 13, for example clockwise as in figure 2, causes the rotation of second rocker 10 in the opposite direction 14, for example counterclockwise.

A second mechanical connection between pendulum 6 and second rocker 10 is obtained by means of the engagement, in particular the contact, of first arm 6a of pendulum 6 with arm 10a of second rocker 10. Through this second mechanical connection, the rotation of pendulum 6 in one direction 15, for example counterclockwise as in figure 2, causes the rotation of second rocker 10 in the same direction 14, for example counterclockwise. Therefore, second rocker 10 is mechanically connected to pendulum 6 so as to rotate in one direction 14 only in which stop member 12 moves toward shoulder 9 when pendulum 6 rotates in this same direction 15 or in the opposite direction 13 due to accelerations acting on inertial mass 8. Elastic means 16, in particular a helical spring arranged around third axis 11, urge second rocker 10 in the direction opposite to direction 14, so as to move stop member 12 away from shoulder 9.

A hydraulic, pneumatic or electric damper 17 which is arranged between frame 2 and pendulum 6 dampens the oscillations of the latter. Cam surface 4 of first rocker 1 is further provided with a hollow 18 suitable for housing at least partially tappet 5 for allowing its free movement. Tongue 6c of pendulum 6, arm 10a and tongue 10b of second rocker 10 are arranged along a fourth axis 19 substantially perpendicular to second axis 7 and/or to third axis 11. Tappet 5 and stop member 12 are arranged along a fifth axis 20 substantially perpendicular to first axis 3.

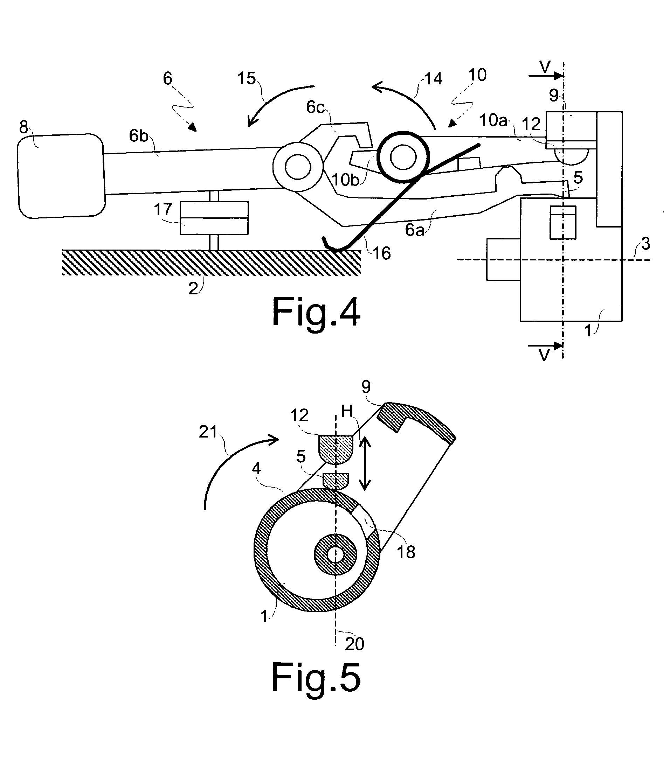

Referring to figures 4 and 5, it is seen that when the handle according to the present invention is used normally, namely when its lever is pulled by a user for opening the door of a vehicle, first rocker 1 rotates around first axis 3 in direction 21, for example clockwise as in figure 5, so that tappet 5 slides on cam surface 4 of first rocker 1, thereby slightly rotating pendulum 6 in direction 15 and consequently second rocker 10 in direction 14, through the mechanical connection between first arm 6a of pendulum 6 and arm 10a of second rocker 10. During the rotation of first rocker 1 around first axis 3, space H occupied in height by tappet 5 and stop member 12 is shorter than the distance between cam surface 4 and shoulder 9 of first rocker 1, so that stop member 12 cannot intercept shoulder 9. When the lever of the handle is not pulled anymore, elastic means rotate first rocker 1 in the direction opposite to direction 21.

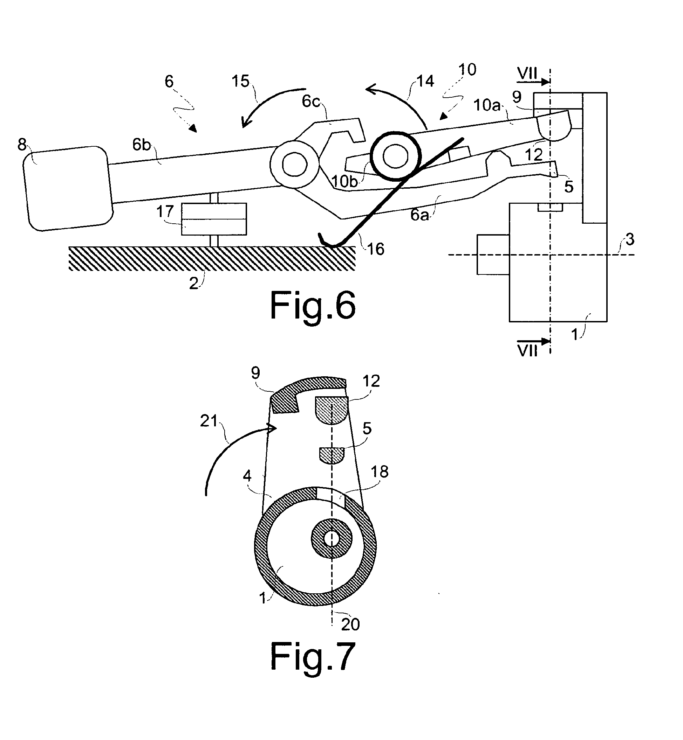

Referring to figures 6 and 7, it is seen that when the handle according to the present invention undergoes an acceleration in a first direction, for example due to an impact, inertial mass 8 rotates pendulum 6 in direction 15, so as to cause a rotation of second rocker 10 in the same direction 14, through the mechanical connection between first arm 6a of pendulum 6 and arm 10a of second rocker 10. During this oscillation, tappet 5 moves away from cam surface 4 of first rocker 1 along fifth axis 20, stop member 12 moves in the same direction of tappet 5 along fifth axis 20 and can intercept shoulder 9 of first rocker 1, so as to prevent at least partially a rotation thereof in direction 21, namely for locking first rocker 1 or allowing only a minimum rotation thereof in direction 21.

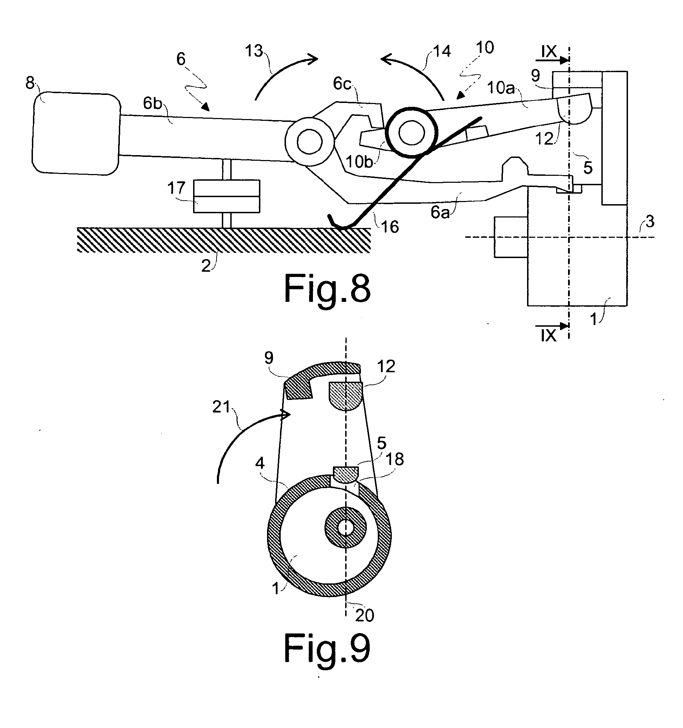

Referring to figures 8 and 9, it is seen that when the handle according to the present invention undergoes an acceleration in a second direction, for example due to an impact, opposite to said first direction, inertial mass 8 rotates pendulum 6 in direction 13, so as to cause a rotation of second rocker 10 in the opposite direction 14, through the mechanical connection between tongue 6c of pendulum 6 and tongue 10b of second rocker 10. During this oscillation, tappet 5 moves close to cam surface 4 of first rocker 1 along fifth axis 20, so as to be housed at least partially in hollow 18, while stop member 12 moves in the opposite direction of tappet 5 along fifth axis 20 and can intercept shoulder 9 of first rocker 1, so as to prevent at least partially a rotation thereof in direction 21.

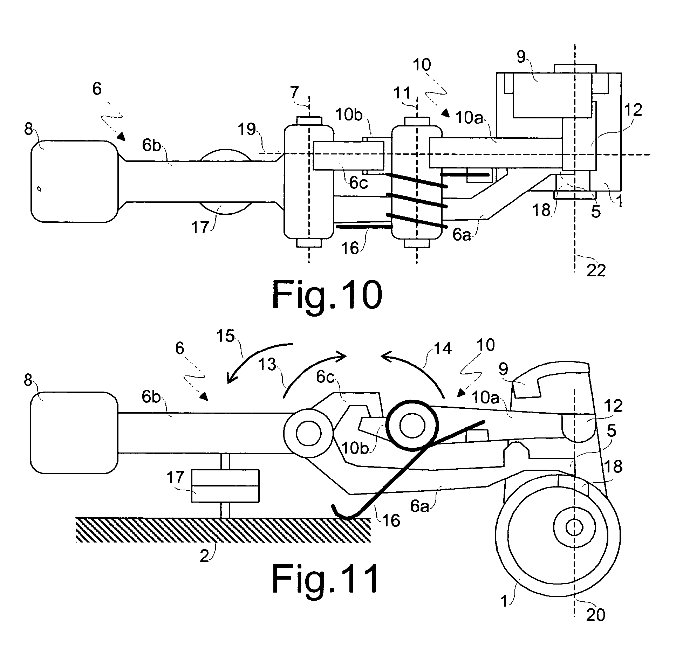

Referring to figures 10 and 11, it is seen that the second embodiment of the handle is substantially the same as the first embodiment, however first rocker 1 can rotate around a first axis 22 substantially parallel to second axis 7 of pendulum 6 and to third axis 11 of second rocker 10. Stop member 12 projects transversely, in particular along an axis substantially parallel to third axis 11, with respect to arm 10a of second rocker 10, so as to intercept shoulder 9, which is arranged beside arm 10a of second rocker 10.

Further modifications and/or additions may be made by those skilled in the art to the hereinabove disclosed and illustrated embodiments while retaining within the scope of the following claims.

## Claims

1. Handle for vehicles, which comprises a first rocker (1) which can rotate with respect to a frame (2) which rotatably supports a lever mechanically connected to the first rocker (1), so that the latter can rotate around a first axis (3; 22) when the lever is driven, wherein a pendulum (6) provided with an inertial mass (8) is pivoted to the frame (2) or to a body integral therewith for oscillating around a second axis (7), said first rocker (1) being provided with a shoulder (9) suitable for being intercepted by a stop member (12) for preventing at least partially the rotation of the first rocker (1), **characterized in that** a second rocker (10) provided with the stop member (12) is mechanically connected to the pendulum (6) for oscillating around a third axis (11) when the pendulum (6) oscillates around the second axis (7), the second rocker (10) being mechanically connected to the pendulum (6) so as to rotate in a direction (14) in which the stop member (12) moves toward the shoulder (9) when the pendulum (6) rotates is this same direction (15) or in the opposite direction (13).

2. Handle according to the previous claim, **characterized in that** the third axis (11) is substantially parallel to the second axis (7).

3. Handle according to one of the previous claims, **characterized in that** the first rocker (1) is provided with a cam surface (4) on which a tappet (5) of the pendulum (6) can slide for oscillating the latter around the second axis (7).

4. Handle according to the previous claim, **characterized in that** the cam surface (4) of the first rocker (1) is provided with a hollow (18) suitable for housing at least partially the tappet (5).

5. Handle according to one of the previous claims, **characterized in that** the mechanical connection between the pendulum (6) and the second rocker (10) is obtained by means of the engagement of a tongue (6c) of the pendulum (6) with a tongue (10b) of the second rocker (10).

6. Handle according to the previous claim, **characterized in that** through said mechanical connection the rotation of the pendulum (6) in a direction (13) causes the rotation of the second rocker (10) in the opposite direction (14).

7. Handle according to one of the previous claims, **characterized in that** the mechanical connection between the pendulum (6) and the second rocker (10) is obtained by means of the engagement of a first ann (6a) of the pendulum (6) with an arm (10a) of the second rocker (10).

8. Handle according to the previous claim, **characterized in that** through said mechanical connection the rotation of the pendulum (6) in a direction (15) causes the rotation of the second rocker (10) in the same direction (14).

9. Handle according to claim 7 or 8, **characterized in that** the tappet (5) is arranged on the first arm (6a) of the pendulum (6), while the inertial mass (8) is arranged on a second arm (6b) of the pendulum (6) opposite to the first arm (6a) with respect to the second axis (7).

10. Handle according to one of claims 7 to 9, **characterized in that** the tongue (6c) of the pendulum (6) is arranged on the same side of the first arm (6a) of the pendulum (6) with respect to the second axis (7).

11. Handle according to one of claims 7 to 10, **characterized in that** the arm (10a) of the second rocker (10) is provided with the stop member (12).

12. Handle according to one of claims 7 to 11, **characterized in that** the tongue (10b) of the second rocker (10) is arranged on the side opposite to the arm (10a) of the second rocker (10) with respect to the third axis (11).

13. Handle according to one of claims 7 to 12, **characterized in that** the tongue (6c) of the pendulum (6), the arm (10a) and the tongue (10b) of the second rocker (10) are arranged along an axis (19) substantially perpendicular to the second axis (7) and/or the third axis (11).

14. Handle according to one of the previous claims, **characterized in that** the tappet (5) and the stop member (12) are arranged along an axis (20) substantially perpendicular to the first axis (3; 22).

15. Handle according to one of the previous claims, **characterized in that** elastic means (16) urge the second rocker (10) so as to move the stop member (12) away from the shoulder (9).

16. Handle according to one of the previous claims, **characterized in that** a damper (17) arranged between the frame (2) and the pendulum (6) dampens the oscillations of the latter.

17. Handle according to one of the previous claims, **characterized in that** the first axis (3) is substantially perpendicular to the second axis (7).

18. Handle according to one claims 1 to 16, **characterized in that** the first axis (22) is substantially parallel to the second axis (7).

19. Handle according to the previous claim, **characterized in that** the stop member (12) projects transversely with respect to the second rocker (10).

20. Handle according to the previous claim, **characterized in that** the shoulder (9) is arranged beside the second rocker (10).

## Patentansprüche

1. Griff für Fahrzeuge, der eine erste Wippe (1) umfasst, die sich bezüglich eines Rahmens (2) drehen kann, der einen mechanisch mit der ersten Wippe (1) verbundenen Hebel drehbar stützt, so dass sich die erste Wippe (1) um eine erste Achse (3; 22) drehen kann, wenn der Hebel angetrieben wird, wobei ein mit einer trägen Masse (8) versehenes Pendel (6) zum Rahmen (2) oder zu einem damit integralen Körper geschwenkt wird, so dass es um eine zweite Achse (7) pendelt, wobei die erste Wippe (1) mit einer Schulter (9) versehen ist, die geeignet ist, von einem Anschlagelement (12) abgefangen zu werden, um die Drehung der ersten Wippe (1) mindestens teilweise zu verhindern, **dadurch gekennzeichnet, dass** eine mit dem Anschlagelement (12) versehene zweite Wippe (10) mechanisch mit dem Pendel (6) verbunden ist, so dass sie um eine dritte Achse (11) pendelt, wenn das Pendel (6) um die zweite Achse (7) pendelt, wobei die zweite Wippe (10) mechanisch mit dem Pendel (6) verbunden ist, um sich in einer Richtung (14) zu drehen, in der sich das Anschlagelement (12) zur Schulter (9) hin bewegt, wenn sich das Pendel (6) in diese selbe Richtung (15) oder in die entgegengesetzte Richtung (13) dreht.

2. Griff nach dem vorhergehenden Anspruch, **dadurch gekennzeichnet, dass** die dritte Achse (11) im Wesentlichen parallel zur zweiten Achse (7) verläuft.

3. Griff nach einem der vorhergehenden Ansprüche, **dadurch gekennzeichnet, dass** die erste Wippe (1) mit einer Nockenoberfläche (4) versehen ist, auf der ein Nockenstößel (5) des Pendels (6) gleiten kann, damit Letzteres um die zweite Achse (7) pendeln kann.

4. Griff nach dem vorhergehenden Anspruch, **dadurch gekennzeichnet, dass** die Nockenoberfläche (4) der ersten Wippe (1) mit einer Aushöhlung (18) versehen ist, in der der Nockenstößel (5) mindestens teilweise untergebracht werden kann.

5. Griff nach einem der vorhergehenden Ansprüche, **dadurch gekennzeichnet, dass** die mechanische Verbindung zwischen dem Pendel (6) und der zweiten Wippe (10) durch den Eingriff einer Zunge (6c) des Pendels (6) in eine Zunge (10b) der zweiten Wippe (10) erhalten wird.

6. Griff nach dem vorhergehenden Anspruch, **dadurch gekennzeichnet, dass** dank der mechanischen Verbindung die Drehung des Pendels (6) in eine Richtung (13) die Drehung der zweiten Wippe (10) in die entgegengesetzte Richtung (14) veranlasst.

7. Griff nach einem der vorhergehenden Ansprüche, **dadurch gekennzeichnet, dass** die mechanische Verbindung zwischen dem Pendel (6) und der zweiten Wippe (10) mittels des Eingriffs eines ersten Arms (6a) des Pendels (6) in einen Arm (10a) der zweiten Wippe (10) erhalten wird.

8. Griff nach dem vorhergehenden Anspruch, **dadurch gekennzeichnet, dass** dank der mechanischen Verbindung die Drehung des Pendels (6) in eine Richtung (15) die Drehung der zweiten Wippe (10) in dieselbe Richtung (14) veranlasst.

9. Griff nach Anspruch 7 oder 8, **dadurch gekennzeichnet, dass** der Nockenstößel (5) am ersten Arm (6a) des Pendels (6) angeordnet ist, während die träge Masse (8) an einem zweiten Arm (6b) des Pendels (6) gegenüber dem ersten Arm (6a) bezüglich der zweiten Achse (7) angeordnet ist.

10. Griff nach einem der Ansprüche 7 bis 9, **dadurch gekennzeichnet, dass** die Zunge (6c) des Pendels (6) an derselben Seite des ersten Arms (6a) des Pendels (6) bezüglich der zweiten Achse (7) angeordnet ist.

11. Griff nach einem der Ansprüche 7 bis 10, **dadurch gekennzeichnet, dass** der Arm (10a) der zweiten Wippe (10) mit dem Anschlagelement (12) versehen ist.

12. Griff nach einem der Ansprüche 7 bis 11, **dadurch gekennzeichnet, dass** die Zunge (10b) der zweiten Wippe (10) an der dem Arm (10a) der zweiten Wippe (10) gegenüberliegenden Seite bezüglich der dritten Achse (11) angeordnet ist.

13. Griff nach einem der Ansprüche 7 bis 12, **dadurch gekennzeichnet, dass** die Zunge (6c) des Pendels (6), der Arm (10a) und die Zunge (10b) der zweiten Wippe (10) entlang einer Achse (19) angeordnet sind, die im Wesentlichen senkrecht zu der zweiten Achse (7) und/oder der dritten Achse (11) verläuft.

14. Griff nach einem der vorhergehenden Ansprüche, **dadurch gekennzeichnet, dass** der Nockenstößel (5) und das Anschlagelement (12) entlang einer Achse (20) angeordnet sind, die im Wesentlichen senkrecht zu der ersten Achse (3; 22) verläuft.

15. Griff nach einem der vorhergehenden Ansprüche, **dadurch gekennzeichnet, dass** elastische Mittel (16) die zweite Wippe (10) so drängen, um das Anschlagelement (12) von der Schulter (9) weg zu bewegen.

16. Griff nach einem der vorhergehenden Ansprüche, **dadurch gekennzeichnet, dass** ein Dämpfer (17) zwischen dem Rahmen (2) und dem Pendel (6) angeordnet ist und das Pendeln des Letzteren dämpft.

17. Griff nach einem der vorhergehenden Ansprüche, **dadurch gekennzeichnet, dass** die erste Achse (3) im Wesentlichen senkrecht zu der zweiten Achse (7) verläuft.

18. Griff nach einem der Ansprüche 1 bis 16, **dadurch gekennzeichnet, dass** die erste Achse (22) im Wesentlichen parallel zu der zweiten Achse (7) verläuft.

19. Griff nach dem vorhergehenden Anspruch, **dadurch gekennzeichnet, dass** das Anschlagelement (12) bezüglich der zweiten Wippe (10) quer vorragt.

20. Griff nach dem vorhergehenden Anspruch, **dadurch gekennzeichnet, dass** die Schulter (9) neben der zweiten Wippe (10) angeordnet ist.

## Revendications

1. Poignée pour véhicules, comprenant un premier bras oscillant (1) qui peut tourner par rapport à un cadre (2) qui supporte à rotation un levier connecté mécaniquement au premier bras oscillant (1), de telle sorte que ce dernier puisse tourner autour d'un premier axe (3 ; 22) lorsque le levier est entraîné, un pendule (6) pourvu d'une masse d'inertie (8) étant pivoté par rapport au cadre (2) ou par rapport à un corps intégré à ce dernier de manière à osciller autour d'un deuxième axe (7), ledit premier bras oscillant (1) étant pourvu d'un épaulement (9) prévu pour être intercepté par un organe de butée (12) de manière à empêcher au moins en partie la rotation du premier bras oscillant (1), **caractérisée en ce qu'**un deuxième bras oscillant (10) pourvu de l'organe de butée (12) est connecté mécaniquement au pendule (6) de manière à osciller autour d'un troisième axe (11) lorsque le pendule (6) oscille autour du deuxième axe (7), le deuxième bras oscillant (10) étant connecté mécaniquement au pendule (6) de manière à tourner dans une direction (14) dans laquelle l'organe de butée (12) se déplace vers l'épaulement (9) lorsque le pendule (6) tourne dans la même direction (15) ou dans la direction opposée (13).

2. Poignée selon la revendication précédente, **caractérisée en ce que** le troisième axe (11) est substantiellement parallèle au deuxième axe (7).

3. Poignée selon la revendication précédente, **caractérisée en ce que** le premier bras oscillant (1) est pourvu d'une surface de came (4) sur laquelle un poussoir (5) du pendule (6) peut glisser de manière à faire osciller ce dernier autour du deuxième axe (7).

4. Poignée selon la revendication précédente, **caractérisée en ce que** la surface de came (4) du premier bras oscillant (1) est pourvue d'un creux (18) prévu pour recevoir au moins en partie le poussoir (5).

5. Poignée selon l'une quelconque des revendications précédentes, **caractérisée en ce que** la connexion mécanique entre le pendule (6) et le deuxième bras oscillant (10) est obtenue au moyen de l'engagement d'une langue (6c) du pendule (6) avec une langue (10b) du deuxième bras oscillant (10).

6. Poignée selon la revendication précédente, **caractérisée en ce que** par le biais de ladite connexion mécanique, la rotation du pendule (6) dans une direction (13) provoque la rotation du deuxième bras oscillant (10) dans la direction opposée (14).

7. Poignée selon l'une quelconque des revendications précédentes, **caractérisée en ce que** la connexion mécanique entre le pendule (6) et le deuxième bras oscillant (10) est obtenue au moyen de l'engagement d'un premier bras (6a) du pendule (6) avec un bras (10a) du deuxième bras oscillant (10).

8. Poignée selon la revendication précédente, **caractérisée en ce que** par le biais de ladite connexion mécanique, la rotation du pendule (6) dans une direction (15) provoque la rotation du deuxième bras oscillant (10) dans la même direction (14).

9. Poignée selon la revendication 7 ou 8, **caractérisée en ce que** le poussoir (5) est agencé sur le premier bras (6a) du pendule (6), la masse d'inertie (8) étant agencée sur un deuxième bras (6b) du pendule (6) opposé au premier bras (6a) par rapport au deuxième axe (7).

10. Poignée selon l'une quelconque des revendications 7 à 9, **caractérisée en ce que** la langue (6c) du pendule (6) est agencée sur le même côté du premier bras (6a) du pendule (6) par rapport au deuxième axe (7).

11. Poignée selon l'une quelconque des revendications 7 à 10, **caractérisée en ce que** le bras (10a) du deuxième bras oscillant (10) est pourvu de l'organe de butée (12).

12. Poignée selon l'une quelconque des revendications 7 à 11, **caractérisée en ce que** la langue (10b) du deuxième bras oscillant (10) est agencée sur le côté opposé au bras (10a) du deuxième bras oscillant (10) par rapport au troisième axe (11).

13. Poignée selon l'une quelconque des revendications 7 à 12, **caractérisée en ce que** la langue (6c) du pendule (6), le bras (10a) et la langue (10b) du deuxième bras oscillant (10) sont agencés suivant un axe (19) substantiellement perpendiculaire au deuxième axe (7) et/ou troisième axe (11).

14. Poignée selon l'une quelconque des revendications précédentes, **caractérisée en ce que** le poussoir (5) et l'organe de butée (12) sont agencés le long d'un axe (20) substantiellement perpendiculaire au premier axe (3 ; 22).

15. Poignée selon l'une quelconque des revendications précédentes, **caractérisée en ce que** des moyens élastiques (16) poussent le deuxième bras oscillant (10) de manière à déplacer l'organe de butée (12) à l'écart de l'épaulement (9).

16. Poignée selon l'une quelconque des revendications précédentes, **caractérisée en ce qu'**un amortisseur (17) disposé entre le cadre (2) et le pendule (6) amortit les oscillations de ce dernier.

17. Poignée selon l'une quelconque des revendications précédentes, **caractérisée en ce que** le premier axe (3) est substantiellement perpendiculaire au deuxième axe (7).

18. Poignée selon l'une quelconque des revendications 1 à 16, **caractérisée en ce que** le premier axe (22) est substantiellement parallèle au deuxième axe (7).

19. Poignée selon la revendication précédente, **caractérisée en ce que** l'organe de butée (12) fait saillie transversalement par rapport au deuxième bras oscillant (10).

20. Poignée selon la revendication précédente, **caractérisée en ce que** l'épaulement (9) est agencé à côté du deuxième bras oscillant (10).
